(19) Europäisches Patentamt
European Patent Office
Office européen des brevets

(11) Publication number: 0 013 996 B1

(12) EUROPEAN PATENT SPECIFICATION

(45) Date of publication of patent specification: 14.12.83

(51) Int. Cl.[3]: C 09 B 62/085, D 06 P 1/382

(21) Application number: 80100402.9

(22) Date of filing: 25.01.80

(54) **Reactive azo compounds, processes for their preparation and their use for dyeing fibers and textiles.**

(30) Priority: 26.01.79 JP 7194/79

(43) Date of publication of application: 06.08.80 Bulletin 80/16

(45) Publication of the grant of the patent: 14.12.83 Bulletin 83/50

(84) Designated Contracting States: BE CH DE FR GB

(56) References cited: FR - A - 2 304 651

The file contains technical information submitted after the application was filed and not included in this specification

(73) Proprietor: NIPPON KAYAKU KABUSHIKI KAISHA
2-1, Marunouchi-1-chome Chiyoda-ku
Tokyo 100 (JP)

(72) Inventor: Shirasaki, Toshitaka
690-24, Shirakuwa
Urawa-shi Saitama-ken (JP)
Inventor: Iizuka, Yutaka
4-102, 1209-4, Shirohata
Urawa-shi Saitama-ken (JP)
Inventor: Yamada, Yasuhi
1750, 2-404, Otani
Omiya-shi Saitama-ken (JP)

(74) Representative: Vossius Vossius Tauchner Heunemann Rauh
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 013 996 B1

Reactive azo compounds, processes for their preparation and their use for dyeing fibers and textiles

The present invention relates to reddish yellow azo compounds which give clear and fast dyeings when dyeing cellulosic fibers, especially by printing or continuous dyeing.

In more detail, this invention relates to reactive azo compounds which, in the free acid form, are represented by the formula:

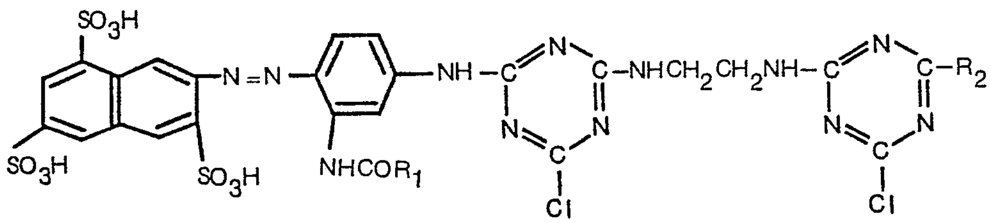

(1)

wherein $R_1$ is amino or methyl, $R_2$ is anilino having at least one sulfo or carboxy and optionally substituted by methyl or chloro; methoxy; amino; alkylamino having 1 to 4 carbon atoms and optionally substituted by hydroxy, carboxy or sulfo, processes for preparing such compounds and a method for dyeing therewith.

The reactive azo compounds of this invention have the advantage of high colour value and clear shade over the dyestuff disclosed in the known Japanese provisional patent publication No. 3334/1972, wherein

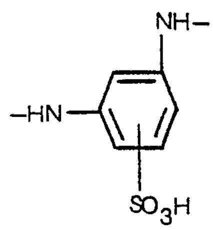

substitutes for —$NHCH_2CH_2NH$— of the formula (1). FR—A—2 304 651 refers to dyestuffs having an ethylene-diamino bridge between the two reactive groups. However, these azo compounds are apt to hydrolyze in water and therefore are not suitable for one-phase printing.

Examples of the groups represented by $R_2$ in formula (1) of this invention are as follows:

4-(or 2 or 3) sulfophenylamino, 2-sulfo-4-methylphenylamino, 2,5-disulfophenylamino, 3-sulfo-4-methylphenylamino, 2-carboxy-4-(or-5-) sulfophenylamino, 4-chloro-3-sulfophenylamino, amino, methylamino, ethanolamino, diethanolamino, carboxymethylamino, 2-sulfoethylamino and the like.

The reactive azo compounds represented by formula (1) can be prepared by the methods set forth below.

The first method comprises reacting a compound of the formula:

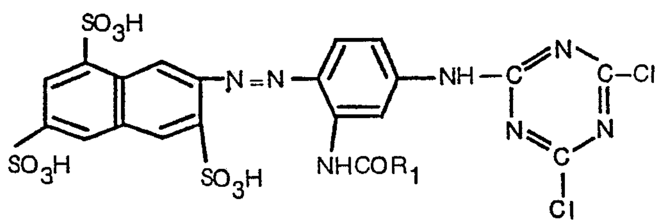

(2)

wherein $R_1$ is as defined above, with a compound of the formula:

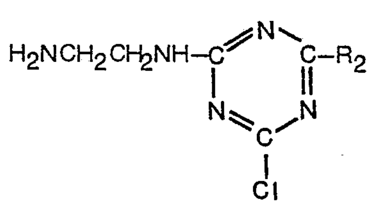

(3)

wherein $R_2$ is as defined above. The reaction can be practised in an aqueous medium, preferably at a pH of 7—9 and at 30—60°C.

The compound of formula (2) can be obtained by condensing a compound represented by the formula:

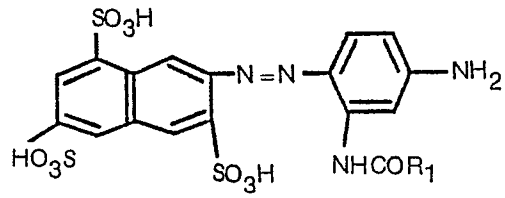

(8)

wherein $R_1$ is as defined above, with cyanuric chloride represented by the formula:

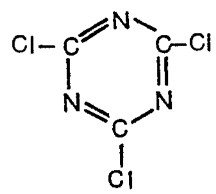

(10)

in an aqueous medium, preferably at a pH of 4—8 and below 20°C.

The compound of formula (3) can be obtained by condensing cyanuric halide of formula (10) with a compound of formula (7) below in the known manner, adding hydrochloride of ethylenediamine or ethylenediamine and hydrochloric acid to adjust the pH to 4—6, and then effecting the reaction at 10—60°C while keeping the pH at 4—6 by addition of acid binding agents, such as sodium carbonate and sodium bicarbonate.

The compound of formula (8) can be obtained by diazotizing 2-aminonaphthalene-3,6,8-trisulfonic acid in the known manner and then coupling with 3-acetyl-aminoaniline or 3-aminophenyl urea in the known manner.

The second method for the preparation of a reactive azo compound of formula (1) comprises reacting an azo compound of the formula:

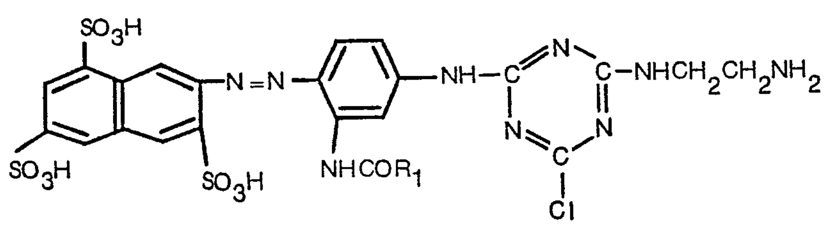

(4)

wherein $R_1$ is as defined above, with a compound of formula:

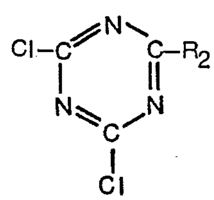

(5)

wherein $R_2$ is as defined above. This reaction can be effected in an aqueous medium, preferably at a pH of 7—9 and at 30—60°C.

The compound of formula (4) can be obtained by condensing a compound of formula (2) with ethylenediamine, preferably at a pH of 4—6 and at 20—60°C.

The compound of formula (5) can be obtained by condensing a cyanuric halide of formula (10) with a compound represented by formula:

$$R_2—H \qquad (7)$$

wherein $R_2$ is as defined above, in an aqueous medium, preferably at a pH of 4—9 and 0—30°C.

As examples of formula (5), for example, 2-(2′- or 3′- or 4′ - sulfoanilino) - 4, 6 - dichloro - S - triazine, 2 - (2′,5′ - disulfoanilino) - 4,6 - dichloro - S - traizine, 2 - amino - 4, 6 - ichloro - S - triazine, 2 - methoxy - 4,6 - dichlor - S - triazine, 2 - (2′ - sulfoethylamino) - 4,6 - dichloro - S - triazine, 2 - (diethanolamino) - 4, 6 - dichloro - S - triazine, 2 - (carboxymethylamino) - 4, 6 -

dichloro - S - triazine, 2 - (3′ - sulfo - 4′ - methylphenylamino) - 4, 6 - dichloro - S - triazine, 2 - (2′ - carboxy - 4′ - (or - 5′) - sulfophenylamino) - 4, 6 - dichloro - S - triazine, 2 - (4′ - chloro - 3′ - sulfophenylamino) - 4, 6 - dichloro - S - triazine and 2 - (ethanolamino) - 4, 6 - dichloro - S - triazine may be mentioned.

The third method comprises reacting a compound of the formula:

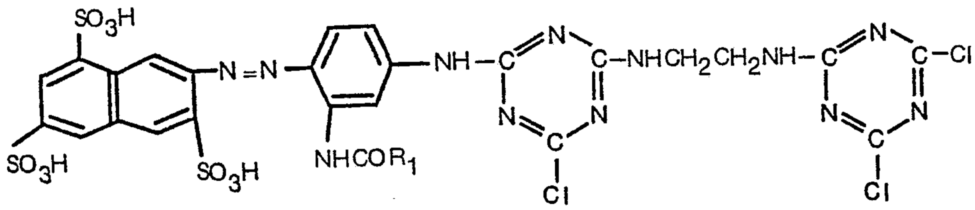 (6)

wherein $R_1$ is as defined above, with the compound of formula (7). The reaction can be effected in an aqueous medium, preferably at a pH of 4—9 and at 10—50°C. The compound of formula (6) can be obtained by condensing the compound of formula (4) as used in the second method with cyanuric halide of formula (10) in an aqueous medium, preferably at a pH of 7—9 and below 20°C.

The new reactive azo compound of this invention is applicable to natural and synthetic fibers such as wool, silk, polyamide, cotton, viscose rayon, regenerated cellulosic fiber, but it is particularly suitable for dyeing cellulosic fibers.

As examples of cellulosic fibers used for the dyeing method of this invention cellulosic fibers such as cotton, linen, viscose rayon, viscose staple fiber, cupra, and their mixed spun, woven and knitted products may be mentioned. The compounds of this invention are advantageously applicable for dyeing cellulosic fibers by usual dip dyeing, printing or padding.

As examples of acid binding agents used in dyeing, for example, sodium hydrogen carbonate, sodium metaphosphate, trisodium phosphate, sodium ortho or meta silicate, sodium carbonate and sodium hydroxide may be mentioned.

When the compound of this invention is applied using a relatively long liquor-to-goods ratio, for examples, a batch type dip dyeing method, a dye bath is usually prepared with an inorganic salt such as sodium chloride or sodium sulfate and the dyestuff, then dyeing is effected at 30—100°C for 10—60 minutes, an acid binding agent is added, and the dyeing is further proceeded at 60—100°C for 20—60 minutes. The acid binding agent may be added to the dye bath at the start of the dyeing, or it is also possible to effect the dyeing first under neutral conditions and then fixing the dyestuff by using another bath containing an acid binding agent and inorganic salt.

When the compound of this invention is applied using a relatively short liquor-to-goods ratio, for example, a continuous or semi-continuous dyeing method, a dye bath is usually prepared with a dyestuff, an acid binding agent, a penetrant and, if necessary, by adding urea, then the fibers are dipped in the bath for a short time, squeezed, and left to stand at room or elevated temperature or subjected to steaming or baking for a short time. In some cases the fibers may first be dipped in a solution of the acid binding agent and then padded in a neutral dye bath. Otherwise the fibers may first be padded in the neutral dye bath, treated with a solution of the acid binding agent saturated with an inorganic salt, and left to stand or treated with heat.

When the compound of this invention is used for printing, the fibers are usually treated with a colour paste formed by incorporating the dyestuff, an acid binding agent and urea into a stock paste such as sodium alginate or an emulsion paste. The printed fibers are then either subjected to intermediate drying followed by heat treatment or left to stand at room or elevated temperature to fix the dyestuff. On occasion the fibers may first be immersed in a solution of an acid binding agent, and then be printed with a neutral colour paste and left to stand or treated with heat.

After the above-mentioned dyeing, padding or printing process, the coloured fibers are washed with water or, if necessary, are subjected to hot soaping in a solution containing a surfactant.

The azo compound of this invention fixes on fibers at a high rate. Therefore, it is very easy to remove the unfixed azo compound from the fibers dyed or printed and thus it is possible to save substantially time and cost required for rinsing fibers.

It is also a great advantage of the compound of this invention that the dyeings of deep shade can be obtained with a relatively small quantity of the reactive azo compound, because the side reaction of reactive azo compound with water is very slight.

Moreover a bright shade of dyeings is also characteristic of the reactive azo compound of this invention and there is no dullness of the shade which occurs generally when two reactive groups are introduced.

The following examples illustrate the present invention, but they are not intended to limit it thereto. In the following examples, parts are by weight.

Example 1

38.3 parts of 2-naphthylamine-3,6,8-trisulfonic acid were dissolved in 400 parts of water under neutral conditions and diazotized with 22 parts of 35% hydrochloric acid and 6.9 parts of sodium nitrite. 15.1 parts of 3-aminophenylurea were added to the resulting mixture and then sodium carbonate was slowly added to make a neutral solution. After the coupling has been completed, 18.4 parts of cyanuric chloride were added to the solution at a temperature below 20°C and stirred for 3 hours while keeping the pH at 4—7 with sodium carbonate. Upon completion of the condensation, 34.5 parts of a compound represented by the formula:

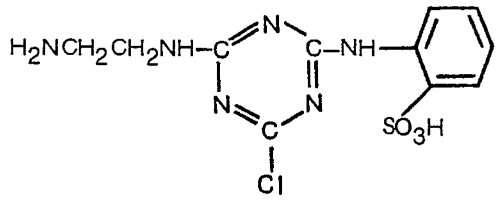

(11)

were added and the reaction was carried out at 40—50°C while keeping the pH at 7.5&8 with sodium bicarbonate. When the reaction ended, red crystals were salted out by addition of 15% common salt to the quantity of the solution. The product thus obtained was a reddish yellow reactive azo compound which is represented by the formula in the free acid form:

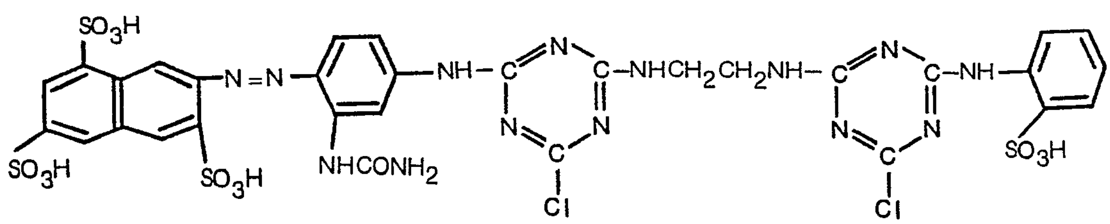

(12)

$\lambda$ max. : 430 nm

and can print the cellulosic fibers to produce dyeings having excellent fastness and bright shade.

The compound of formula (11) was prepared by first condensing 17.3 parts of aniline-o-sulfonic acid with 18.5 parts of cyanuric chloride, further condensing 6.0 parts of ethylenediamine with dihydrochloride at 50—60°C and a pH of 4—6, filtering and washing thoroughly with water.

When the compound of the formula:

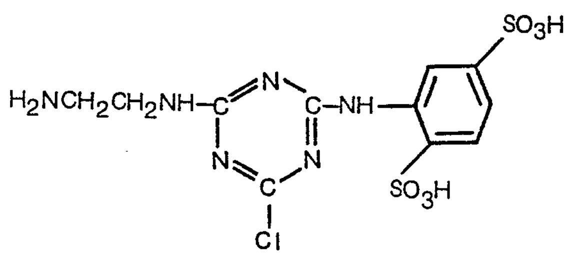

(13)

was used as the condensing component in place of the compound of formula (11) above, an azo compound represented by the formula:

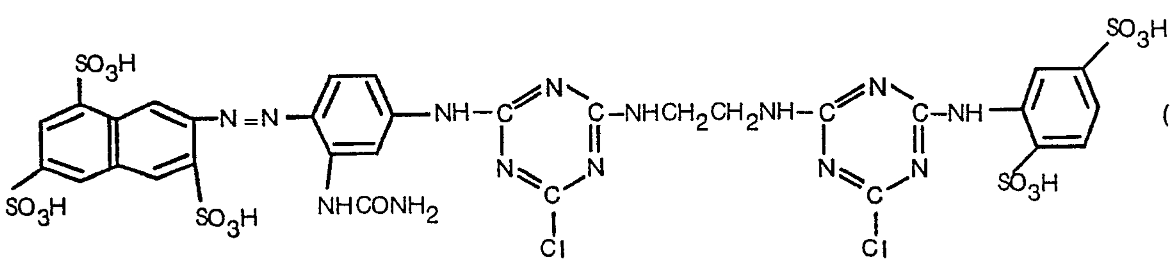

(14)

$\lambda$ max. : 430 nm

was obtained. The fastness of the compound is almost equal to that of the compound of formula (12).

Example 2

To 69.3 parts of the compound of the formula:

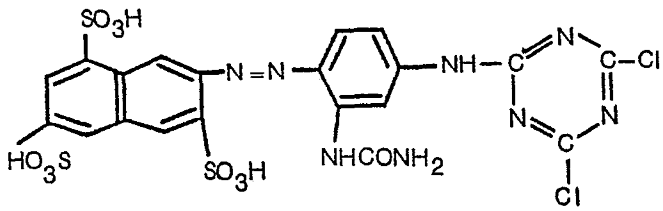

(15)

which was synthesized by the method as described in Example 1, was added an aqueous solution of 6 parts of ethylenediamine and 18 parts of 35% hydrochloric acid, condensation was carried out at 30—40°C and a pH of 4—6, then salt was added and filtered. To this was added the condensation product obtained with 18.5 parts of cyanuric chloride and 17.3 parts of aniline-4-sulfonic acid and the reaction was carried out for 3 hours adjusting the temperature to 40—50°C and the pH at 8. After completion of the reaction, crystals are salted out by addition of 10% salt to the quantity of the reaction solution. The product thus obtained is an azo compound which is presented by the formula in the free acid form:

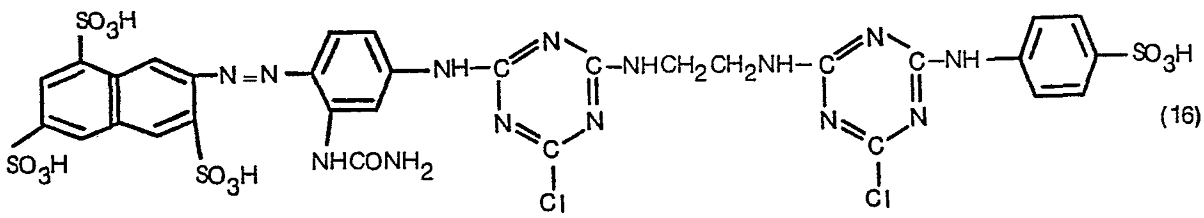

(16)

$\lambda$ max. : 431 nm

and can produce dyeings having excellent fastnesses.

Example 3

In a similar manner as described in Example 1, 38.3 parts of 2-naphthylamine-3,6,8-trisulfonic acid were diazotized, and to this were added 15.0 parts of 3-actylaminoaniline; then coupling was carried out while adjusting the pH to 5—6 with sodium carbonate. After coupling, 18.4 parts of cyanurioc chloride were added by itself or as its acetone solution and condensed at a temperature below 20°C and a pH of 4—7. After the condensation is completed, 34.5 parts of the compound of the formula:

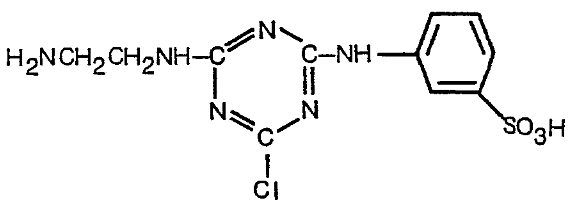

(17)

were added to complete the reaction at 40—50°C keeping the pH at 7.5—8.0 with 20 parts of sodium bicarbonate. Then by addition of 10% salt to the quantity of the solution, there were salted out red crystals which are represented by the formula in the free acid form:

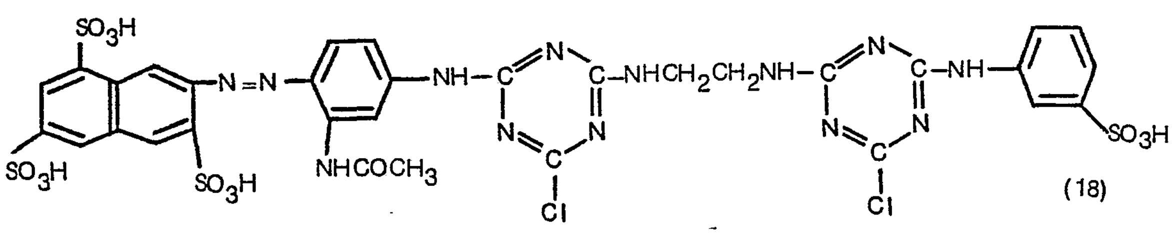

(18)

$\lambda$ max. : 420 nm

This azo compound printed cellulosic fibers to produce a dyed cloth having bright shade and excellent fastnesses.

Example 4

To 71.8 parts of the compound of the formula:

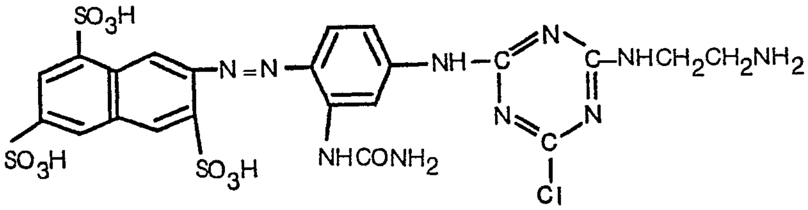

(19)

which was prepared in the manner as described in Example 2, there were added 18.4 parts of cyanuric chloride at a temperature below 20°C and condensed while adjusting the pH to 7—8. Then a solution of 12.5 parts of 2-sulfoethylamine in 50 parts of water was added and condensed at 40—50°C and a pH of 8. Upon addition of 15% salt to the quantity of the solution red crystals were salted out. This product was a reddish yellow azo compound which, having $\lambda$ max. 430 nm, is represented by the formula:

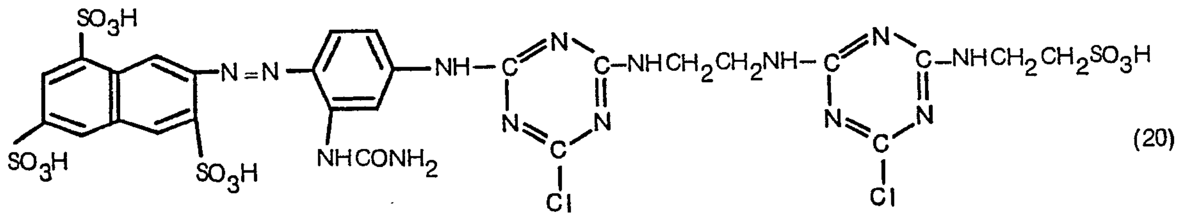

(20)

and dyed cellulose to produce bright and fast colour shade.

In a similar manner as described in Examples 1 to 4, dyes which are represented by the formula:

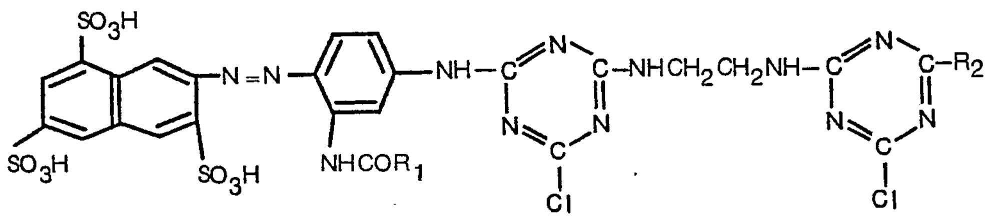

wherein $R_1$ and $R_2$ are given in the table below, were obtained.

| No. | $R_1$ | $R_2$ | λ max nm |
|---|---|---|---|
| 21 | $-NH_2$ | 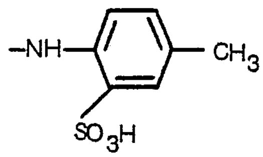 | 430 |
| 22 | $-NH_2$ | $-NHCH_2COOH$ | 430 |
| 23 | $-NH_2$ | 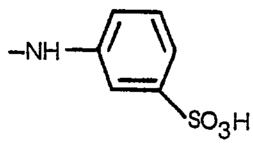 | 430 |
| 24 | $-NH_2$ | $-NH_2$ | 430 |
| 25 | $-NH_2$ | 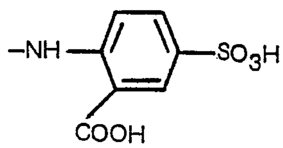 | 430 |
| 26 | $-CH_3$ | 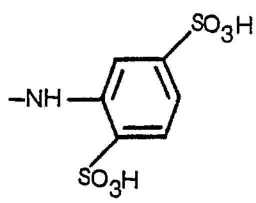 | 420 |
| 27 | $-CH_3$ | 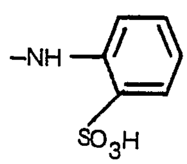 | 420 |
| 28 | $-CH_3$ | $-NHCH_2CH_2OH$ | 420 |
| 29 | $-CH_3$ | $-OCH_3$ | 420 |

Example 5

Azo compounds represented by formula (12) of Example 1, formula (20) of Example 4 and the formula:

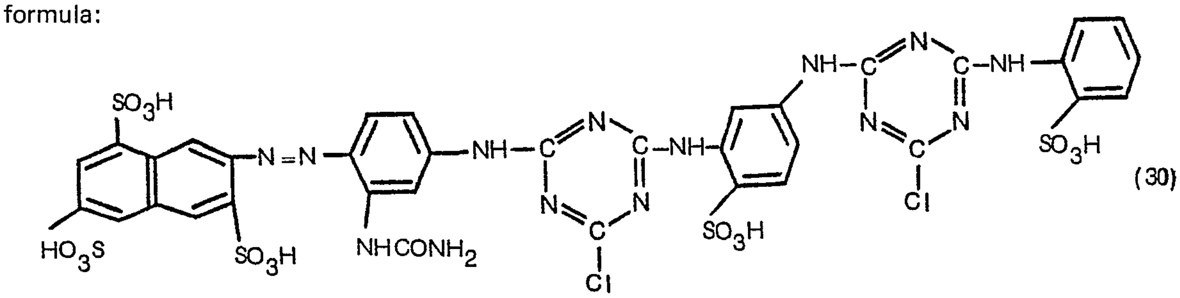

(30)

which is included in the Japanese provisional patent publication No. 3334/1972 and compound of formula:

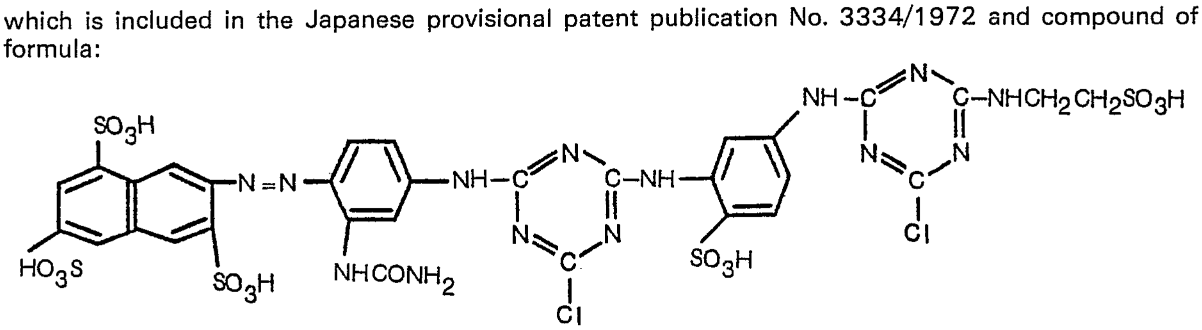

were subject to the comparative tests as described below.

The colour paste used was prepared by the following composition:

| | | | |
|---|---|---|---|
| Azo compound | X parts | Sodium bicarbonate | 20 parts |
| 50% sodium alginate | 500 parts | Reduction inhibitor | 10 parts |
| Urea | 100 parts | Water | 370—X parts |

Note: X represents 10, 30 or 60.

Polimin L new (made by Nippon Kayaku) was used as the reduction inhibitor.

Mercerized cotton cloth was printed wih the colour paste as given above, dried at 60°C for 10—30 minutes, treated in saturated steam at 100°C for 10 minutes and rinsed with running water. Then the printed material was treated for 10 minutes in a soaping bath at 100°C containing an anionic surfactant at a rate of 1g. per liter, rinsed with water and dried.

Among those cloths dyed as above, the materials dyed with the azo compounds of formulae (12) and (20) of the present invention showed 10—15% higher colour value and brighter colour shade (rating of 4 or 4—5 according to Standard Grey Scall for Change in Shade JIS. L 0804) as compared with those dyed with the azo compounds of formulae (30) and (31), regardless of the values of X, 10, 30 and 60. Thus the advantage of the azo compounds of this invention was confirmed.

Example 6

1,000 parts of colour paste were prepared from 30 parts of the azo compound of formula (16) obtained by the method described in Example 2 above, 500 parts of 50% sodium alginate, 100 parts of urea, 10 parts of a reduction inhibitor, 20 parts of sodium carbonate and 340 parts of water. The colour paste was printed on a mercerized cotton cloth, dried at 60°C and baked at 150°C for 3 minutes. Then the printed material was rinsed with water, soaped in a bath containing an anionic surfactant at 100°C for 10 minutes, rinsed with water and dried.

The dyed cloth thus obtained has excellent fastness, especially wet fastness.

Example 7

A padding bath was prepared in the composition as given below.

| | |
|---|---|
| Azo compound of Example 1, formula (14) | X parts |
| Sodium alginate | 1 part |
| Reduction inhibitor | 2 parts |

| | |
|---|---|
| Urea | 50 (X = 10) parts |
| | 100 (X = 30) parts |
| | 150 (X = 60) parts |
| Sodium carbonate | 20 parts |
| Water | 767 (X = 60) parts |
| | 847 (X = 30) parts |
| | 91 (X = 10) parts |

Note: X represents 10, 30 or 60.
Polimin L new (made by Nippon Kayaku) was used as a reduction inhibitor.

A non-mercerized cotton cloth was padded in the bath described above, squeezed with a mangle to a squeezing rate of 60%, dried at 100°C for 2 minutes and baked at 150°C for 3 minutes. Then the cloth was rinsed with running water, treated in a soaping bath containing an anionic surfactant at a rate of 1 g. per liter at 100°C for 10 minutes, rinsed again with running water and dried.

Regardless of the value of X as noted above, i.e. 10, 30 or 60, a reddish yellow dyeing was obtained having excellent fastness to light and chlorine, especially so superior in wet fastness as rating of 5 of cotton staining in the washing fastness test.

Example 8

1,000 parts of padding bath were prepared from 10 parts of the azo compound of formula (18) as given in Example 3, 100 parts of urea, 20 parts of sodium carbonate, 1 part of sodium alginate, 5 parts of a reduction inhibitor and 864 parts of water. A spun rayon cloth was padded in this bath, squeezed to a squeezing rate of 60% and steamed in saturated steam at 100°C for 7 minutes. Then the cloth was rinsed with water, soaped, rinsed again with water and dried. Thus, a bright reddish yellow dyeing of especially excellent wet fastness was obtained.

**Claims**

1. A reactive azo compound which, in the free acid form, is represented by the formula:

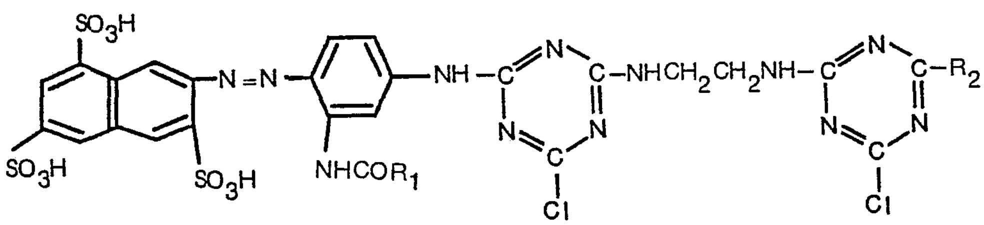 (1)

wherein

$R_1$ is amino or methyl

$R_2$ is anilino having one or two sulfo or carboxy and optionally substituted by methyl or chloro; methoxy; amino; alkylamino having 1 to 4 carbon atoms and optionally substituted by hydroxy, carboxy or sulfo,

2. A reactive azo compound as claimed in claim 1 which, in the free acid form, is represented by the formula;

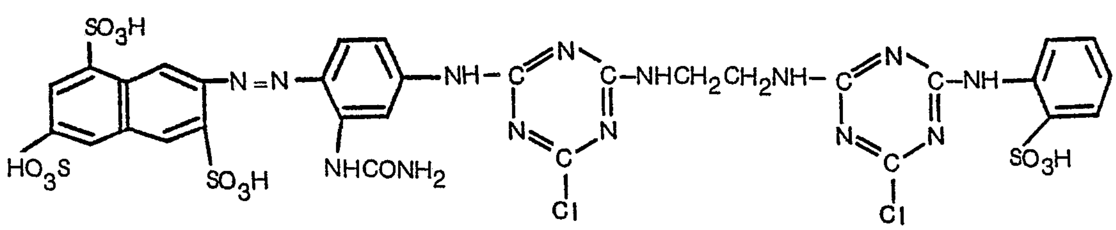

3. A reactive azo compound as claimed in claim 1 which, in the free acid form, is represented by the formula:

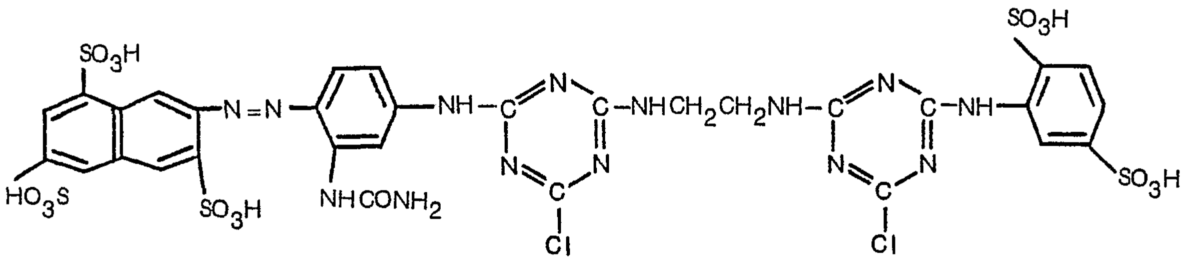

4. A reactive azo compound as claimed in claim 1 which, in the free acid form, is represented by the formula:

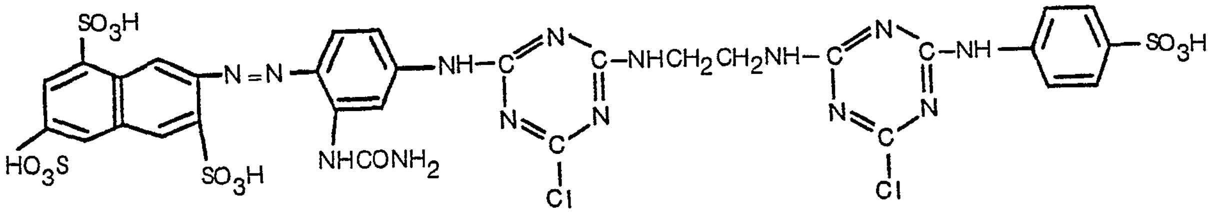

5. A reactive azo compound as claimed in claim 1 which, in the free acid form, is represented by the formula:

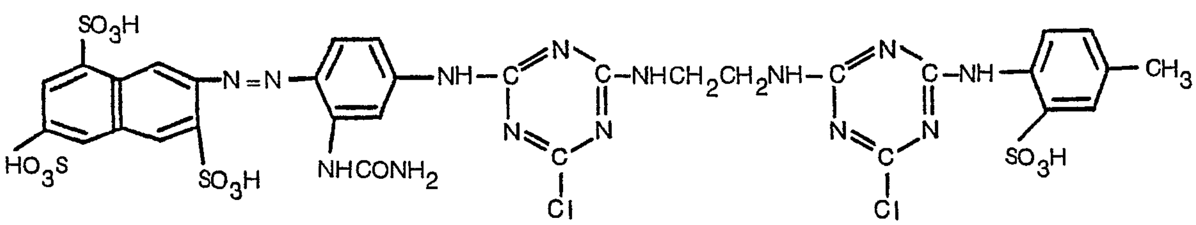

6. A reactive azo compound as claimed in claim 1 which, in the free acid form, is represented by the formula:

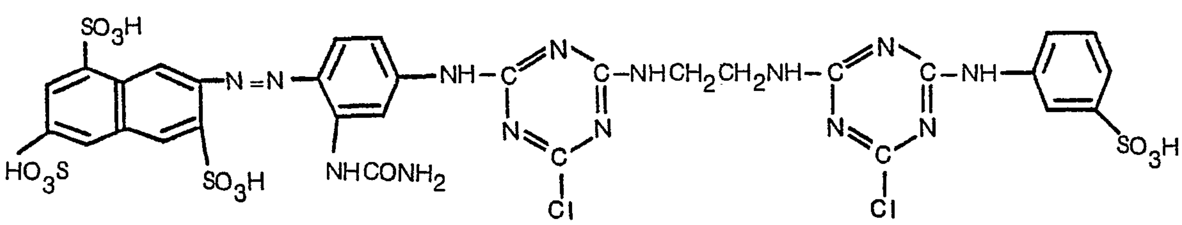

7. A process for preparing a reactive azo compound represented by the formula (1) which comprises reacting one mole of a compound represented by the formula in the free acid form:

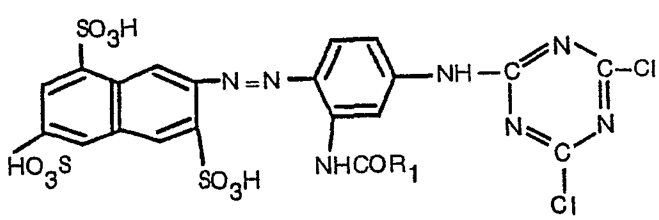

wherein $R_1$ is as defined above, with one mole of a compound represented by the formula:

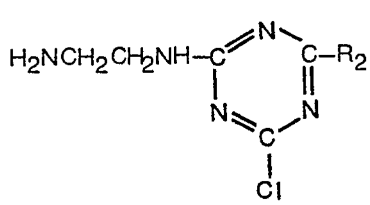

(3)

wherein $R_2$ is as defined above.

8. A process for preparing a reactive azo compound represented by the formula (1) which comprises reacting one mole of an azo compound represented by the formula in the free acid form:

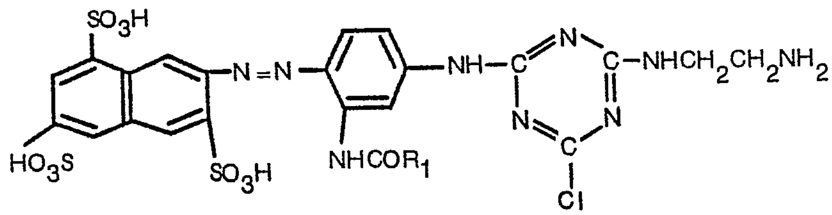

(4)

wherein $R_1$ is as defined above, with one mole of a compound represented by the formula:

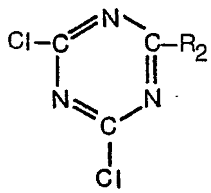

(5)

wherein $R_2$ is as defined above.

9. A process for preparing a reactive azo compound represented by formula (1) which comprsies reacting one mole of a compound represented by the formula in the free acid form:

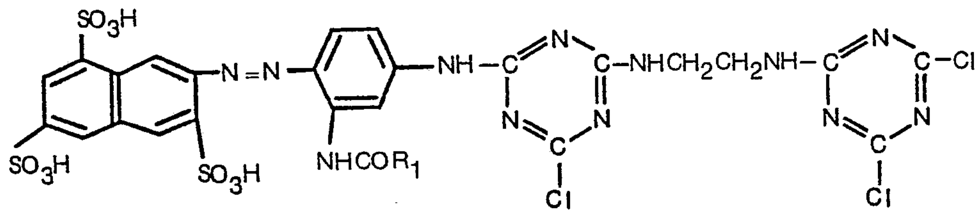

(6)

wherein $R_1$ is as defined above, with one mole of a compound represented by the formula:

$$R_2H \quad (7)$$

wherein $R_2$ is as defined above.

10. Use of the compounds defined in claims 1 to 6 for dyeing fibers and textiles.

**Patentansprüche**

1. Eine reaktive Azoverbindung, die in ihrer freien Säureform dargestellt wird durch die Formel

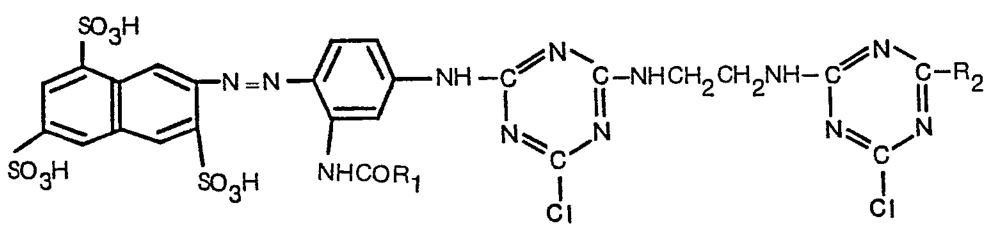

(1)

in der

$R_1$ Amino oder Methyl ist,

$R_2$ Anilino mit 1 bis 2 Sulfo oder Carboxy und gegebenenfalls substituiert durch Methyl oder Chlor ist; Methoxy; Amino; Alkylamino mit 1 bis 4 Kohlenstoffatomen und gegebenenfalls substituiert durch Hydroxy, Carboxy oder Sulfo ist.

2. Eine reaktive Azoverbindung nach Anspruch 1, die in der freien Säureform dargestellt ist durch die Formel:

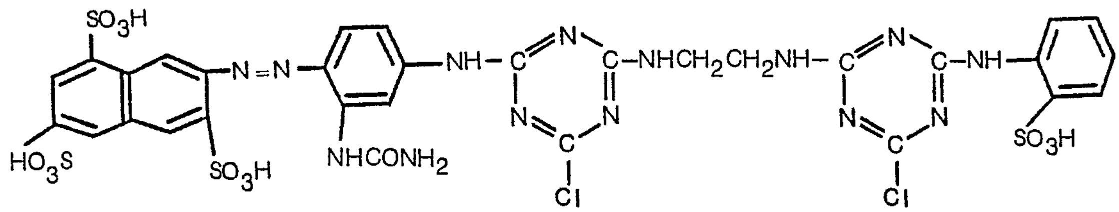

3. Eine reaktive Azoverbindung nach Anspruch 1, die in der freien Säureform dargestellt ist durch die Formel

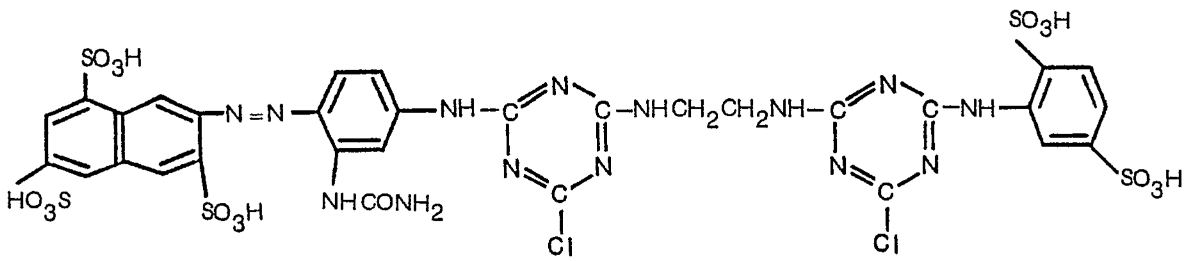

4. Eine reaktive Azoverbindung nach Anspruch 1, die in der freien Säureform dargestellt ist durch die Formel:

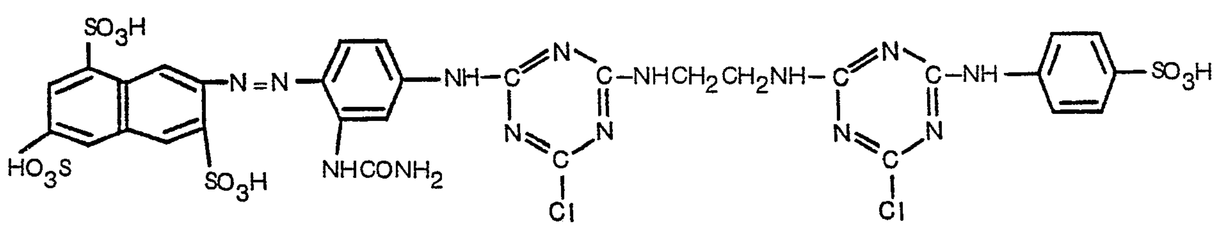

5. Eine reaktive Azoverbindung nach Anspruch 1, die in der freien Säureform dargestellt ist durch die Formel:

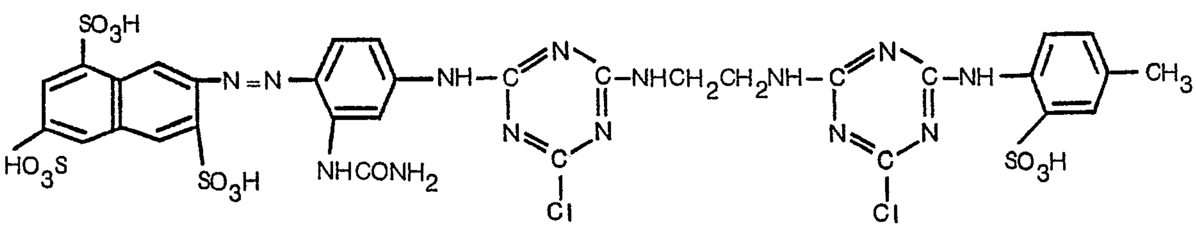

6. Eine reaktive Azoverbindung nach Anspruch 1, die in der freien Säureform dargestellt ist durch die Formel:

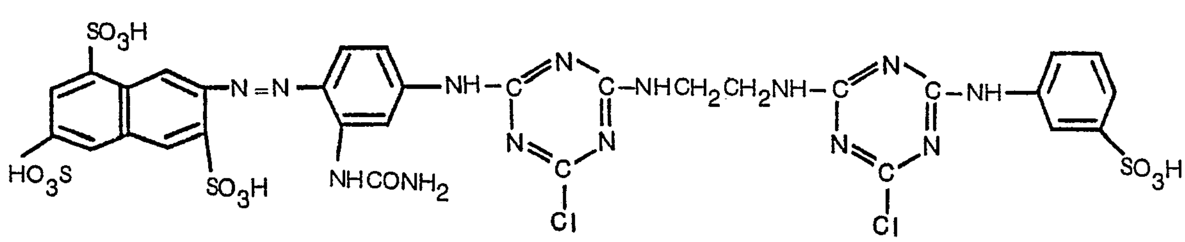

7. Ein Verfahren zur Herstellung einer reaktiven Azoverbindung, dargestellt durch die Formel (1), gekennzeichnet, durch Umsetzung eines Mols einer Verbindung, dargestellt durch die Formel in der freien Säureform:

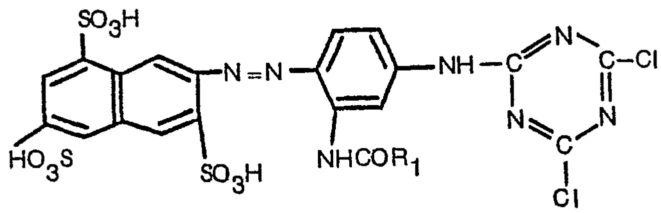

in der $R_1$ die vorstehend angegebene Bedeutung hat, mit einem Mol einer Verbindung dargestellt durch die Formel:

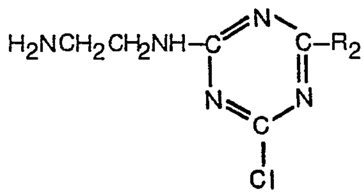

(3)

in der $R_2$ die vorstehend genannte Bedeutung hat.

8. Ein Verfahren zur Herstellung einer reaktiven Azoverbindung, dargestellt durch die Formel (1), gekennzeichnet durch Umsetzung eines Mols einer Azoverbindung dargestellt durch die Formel in der freien Säureform:

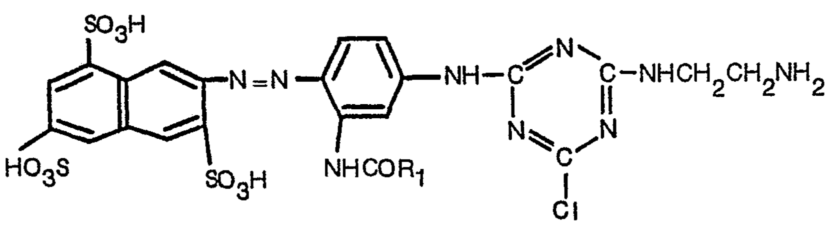

(4)

in der $R_1$ die vorstehend genannte Bedeutung hat, mit einem Mol einer Verbindung dargestellt durch die Formel

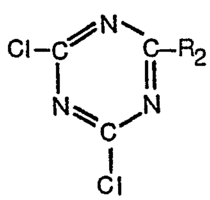

(5)

in der $R_2$ die vorstehend angegebene Bedeutung hat.

9. Ein Verfahren zur Herstellung einer reaktiven Azoverbindung dargestellt durch die Formel (1), gekennzeichnet durch Umsetzung eines Mols einer Verbindung dargestellt durch die Formel in der freien Säureform:

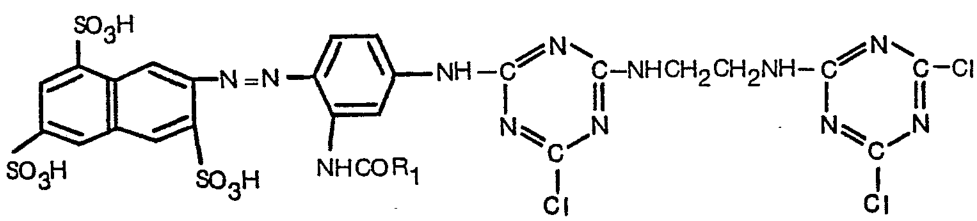

(6)

in der $R_1$ die vorstehend genannte Bedeutung hat, mit einem Mol einer Verbindung dargestellt durch die Formel:

$$R_2H \qquad (7)$$

in der $R_2$ die vorstehend genannte Bedeutung hat.

10. Verwendung der Verbindungen nach den Ansprüchen 1 bis 6 zum Färben von Fasern und Textilien.

**Revendications**

1. Composé azoique-réactif, qui sous forme d'acide libre, est représenté par la formule:

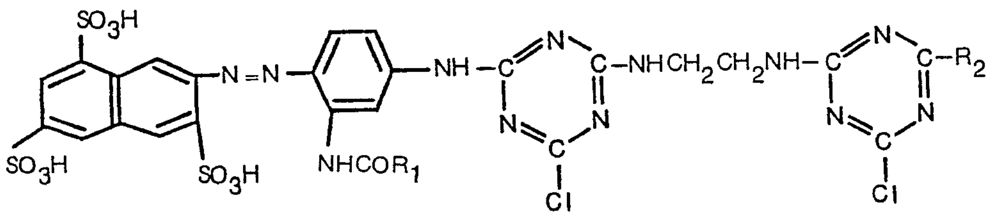

(1)

où

$R_1$ est amino ou méthyl,

$R_2$ est anilino comportant un ou deux sulfo ou carboxy et éventuellement substitué par méthyl ou chloro; méthoxy; amino; alkylamino ayant de 1 à 4 atomes de carbone et éventuellement substitué par hydroxy, carboxy ou sulfo.

2. Composé azoique-réactif selon la revendication 1 qui, sous la forme d'acide libre, est représenté par la formule:

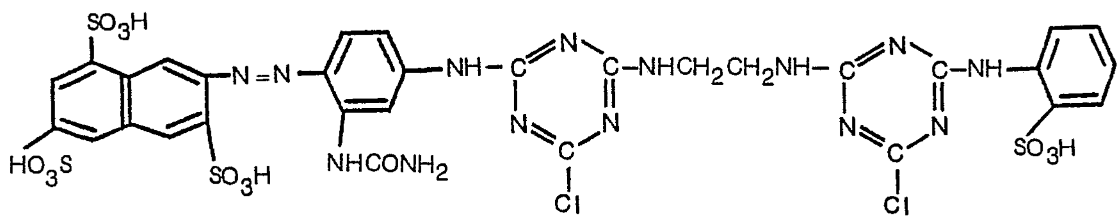

3. Composé azoique-réactif selon la revendication 1 qui, sous la forme d'acide libre, est représenté par la formule:

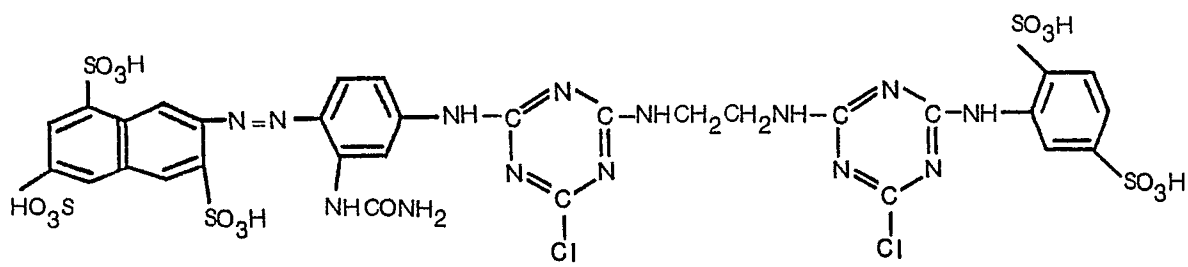

4. Composé azoique-réactif selon la revendication 1 qui, sous la forme d'acide libre, est représenté par la formule:

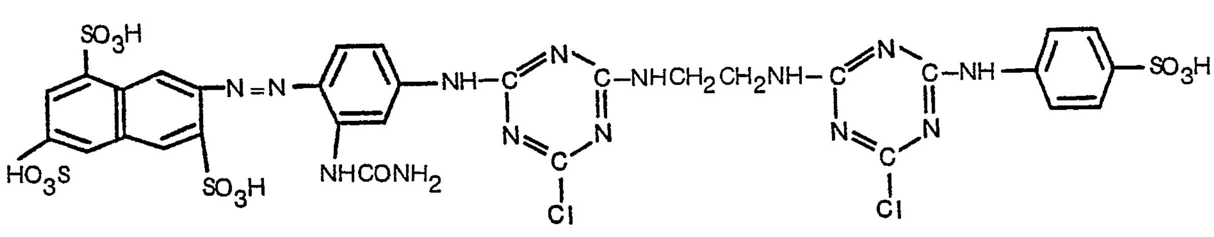

5. Composé azoique-réactif selon la revendication 1 qui, sous la forme d'acide libre, est représenté par la formule:

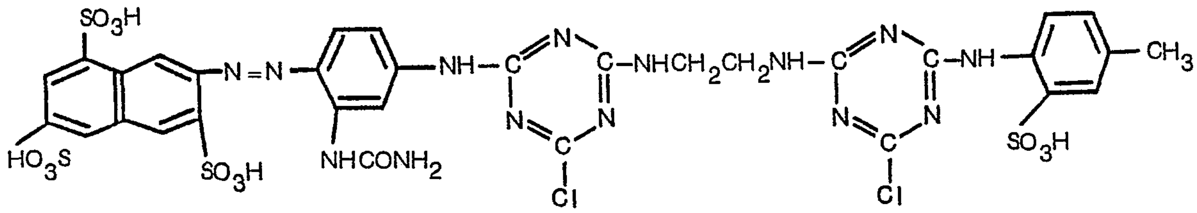

6. Composé azoique-réactif selon la revendication 1 qui, sous la forme d'acide libre, est représenté par la formule:

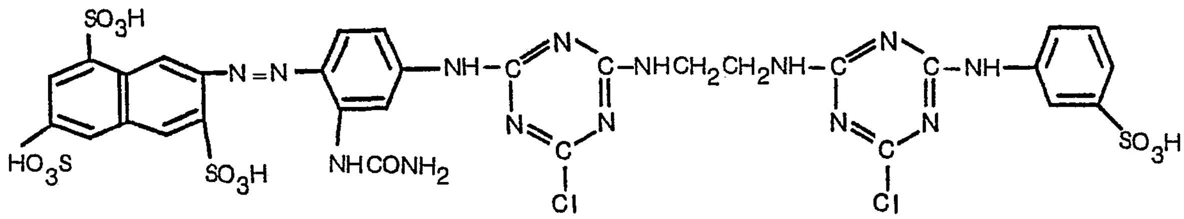

7. Procédé de préparation d'un composé azoique-réactif représenté par la formule (1), qui comprend la réaction d'une mole d'un composé par la formule, sous forme d'acide libre:

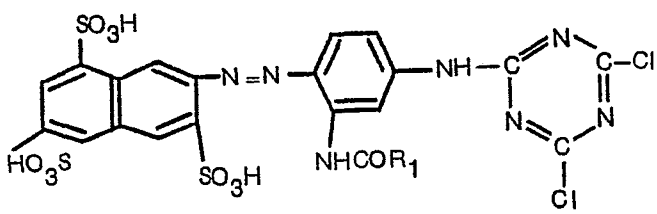

où $R_1$ est défini comme ci-dessus, avec une mole d'un composé représenté par la formule:

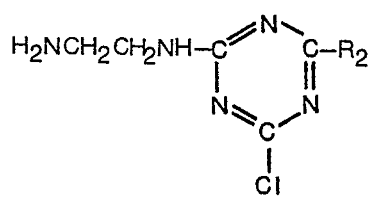

(3)

où $R_2$ est tel que défini ci-dessus.

8. Procédé de préparation d'un composé azoique-réactif représenté par la formule (1), qui comprend la réaction d'une mole d'un composé azo par la formule, sous forme d'acide libre:

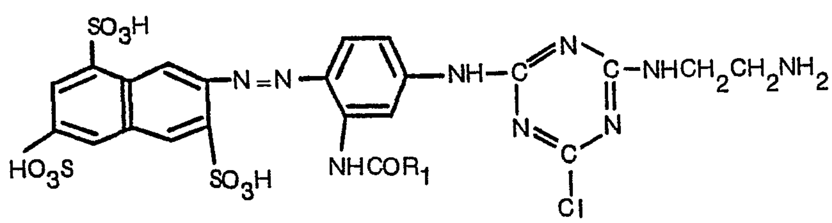

(4)

où $R_1$ est tel que défini ci-dessus, avec une mole d'un composé représenté par la formule:

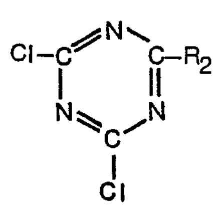

(5)

où $R_2$ est tel que défini ci-dessus.

9. Procédé de préparation d'un composé azoique-réactif représenté par la formule (1), qui comprend la réaction d'une mole d'un composé représenté par la formule, sous forme d'acide libre:

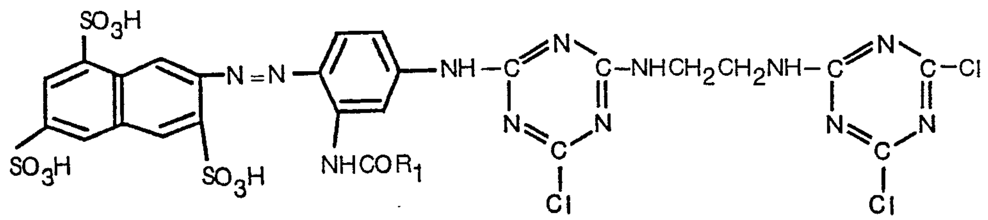

(6)

où $R_1$ est tel que défini ci-dessus, avec une mole d'un composé représenté par la formule:

$$R_2H \quad (7)$$

où $R_2$ est tel que défini ci-dessus.

10. Utilisation des composés définis aux revendications 1 à 6 pour teindre des fibres et des textiles.